(19) Europäisches Patentamt / European Patent Office / Office européen des brevets

(11) **EP 1 602 575 B1**

(12) **EUROPÄISCHE PATENTSCHRIFT**

(45) Veröffentlichungstag und Bekanntmachung des Hinweises auf die Patenterteilung:
**10.08.2011 Patentblatt 2011/32**

(51) Int Cl.:
*B64C 3/10* (2006.01)   *B64C 5/00* (2006.01)
*F42B 10/14* (2006.01)

(21) Anmeldenummer: **05011439.6**

(22) Anmeldetag: **27.05.2005**

(54) **Trag- oder Leitelement**

Supporting or guiding element

Elément portant ou de guidage

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **01.06.2004 DE 102004026625**
**04.02.2005 DE 102005005234**

(43) Veröffentlichungstag der Anmeldung:
**07.12.2005 Patentblatt 2005/49**

(73) Patentinhaber: **Deutsches Zentrum für Luft- und Raumfahrt e.V.**
**51147 Köln (DE)**

(72) Erfinder: **Schülein, Erich, Dr.**
**37127 Scheden (DE)**

(74) Vertreter: **Rehberg Hüppe + Partner**
**Patentanwälte**
**Nikolausberger Weg 62**
**37073 Göttingen (DE)**

(56) Entgegenhaltungen:
**US-A- 3 069 119   US-A- 4 194 519**
**US-A- 5 088 665   US-A- 5 901 925**
**US-A- 6 073 879**

**Beschreibung**

Die Erfindung betrifft ein Trag- oder Leitelement mit Vorderkanten und Hinterkanten für ein Fluggerät im Überschallbereich, wobei das Trag- oder Leitelement Teil eines Gitterflügels ist.

## STAND DER TECHNIK

Durch den Widerstand der Luft ist eine Fortbewegung von Fluggeräten mit ansteigenden Geschwindigkeiten mit expotentiell anwachsenden Energieverlusten verbunden. Weiterhin ruft der Widerstand eine Beanspruchung der Bauelemente der Fluggeräte hervor, welche bei einer Dimensionierung berücksichtigt werden müssen. Damit gibt der Widerstand minimale Bauteildimensionen vor und führt zu einer Vergrößerung eines Verbrauches von Antriebsmitteln zur Erzeugung und Aufrechterhaltung einer Fluggeschwindigkeit und unter Umständen zu einer Verringerung einer möglichen Nutzlast. Beispielsweise korreliert in modernen Verkehrsflugzeugen eine Veränderung des Gesamtwiderstands um 1 % mit einer Veränderung der möglichen Nutzlast von ungefähr 5 bis 10 %, vgl.

   D. Bushnell, Supersonic Aircraft Drag Reduction, AIAA Paper 90-1596, June 1990 [1],

wobei [1] eine Übersicht der bekannten Technologien zur Widerstandsreduzierung zu entnehmen ist.

Mit einer Vergrößerung der Fluggeschwindigkeit steigt infolge der expotentiellen Abhängigkeit der Einfluss des Widerstandes, so dass bei Überschallflugzeugen eine noch deutlichere Leistungssteigerung mit beispielsweise einer Reduzierung des Gesamtwiderstandes um 1 % herbeigeführt werden kann.

In der Praxis wird die Form der von der Luft umströmten Trag- oder Leitelemente durch eine Optimierung vielfältiger Anforderungen abgestimmt. Beispielsweise besteht die Anforderung der Bereitstellung von Trag- und/oder Führungseigenschaften über einen großen Geschwindigkeitsbereich. Dieser Anforderung wird für Trag- oder Leitelemente von Überschallflugzeugen dadurch Rechnung getragen, dass diese schwenkbar sind oder eine komplexe Planform aufweisen, die bei einem Betrieb mit Überschallfluggeschwindigkeiten einen möglichst geringen Wellenwiderstand und bei Start und Landung einen ausreichend großen Auftrieb erzeugen.

Andererseits erfolgt eine aerodynamische Grundauslegung von Trag- oder Leitelementen auf Basis einfacher mathematischer bzw. numerischer Modelle, die Trag- oder Leitelemente mit einfachen Grundformen erfordern, vgl. [1]. Beispiele für derart einfache Formen der Trag- oder Leitelemente sind solche, die sich insbesondere mit Hilfe der Theorie des unendlich schiebenden Flügels bzw. im Rahmen einer 2-D-Betrachtung etc. beschreiben lassen.

   Bertin J. & Smith M., Aerodynamics for Engineers, Prentice-Hall, 1979, 410 p. [2]

ist eine Übersicht über den Wissensstand zur Widerstandsreduzierung bei einem Planarflügel zu entnehmen.

Der Einsatz mäanderförmiger Kanten für Flugkörper ist an sich bekannt, nämlich für einen Diffusor aus US 4,194,519, welche den nächstliegenden Stand der Technik darstellt und den Oberbegriff des Anprunchs 1 offenbart, für eine Stirnseite oder Mantelfläche des Flugkörpers aus US 5,901,925, für den Einlassbereich einer Turbine aus US 3,069,119 sowie für die Hinterkante eines Tragflügels aus US 5,088,665.

US 6,073,879 offenbart Stand der Technik zu Gitterflügeln.

## AUFGABE DER ERFINDUNG

Der vorliegenden Erfindung liegt die Aufgabe zugrunde, die aerodynamischen Eigenschaften von Trag- oder Leitelementen eines Gitterflügels zu verbessern. Insbesondere beschäftigt sich die Erfindung mit der Aufgabe, den Druck- oder Wellenwiderstand von Trag- oder Leitelementen von Gitterflügeln zu verringern, so dass sich der Gesamtwiderstand verringert.

## LÖSUNG

Die Aufgabe der Erfindung wird durch ein Trag- oder Leitelement mit den Merkmalen des Patentanspruchs 1 gelöst. Bevorzugte Ausführungsformen des neuen Trag- oder Leitelementes sind in den Unteransprüchen 2 bis 14 beschrieben.

## BESCHREIBUNG DER ERFINDUNG

Das erfindungsgemäße Trag- oder Leitelement kann ausschließlich Trag- oder Leitfunktionen erfüllen oder beiden vorgenannten Zwecken dienen, wobei das Ausmaß der vorgenannten Funktionen in Betrieb des Fluggerätes variieren kann, beispielsweise mit der Fluggeschwindigkeit oder einer automatisierten Verstellung, beispielsweise eines Anstellwinkels des Trag- oder Leitelementes.

Das Trag- oder Leitelement findet Einsatz in einem Fluggerät, welches sich in einem Überschallbereich bewegen kann. Hierunter werden Fluggeschwindigkeiten verstanden, bei den sich das gesamte Fluggerät im Überschallbereich befindet oder aber nur lokal Überschallgeschwindigkeiten auftreten (auch als "Transschallbereich" bezeichnet).

Bei einem erfindungsgemäßen Trag- oder Leitelement ist eine Stirnkontur, hier eine stromaufwärts des Strömungsmediums angeordnete oder eine stromabwärts angeordnete Stirnkontur, oder sind beide vorgenannten Stirnkonturen in Strömungsrichtung mäanderförmig ausgebildet. Dies bedeutet, dass Teilbereiche der Stirnkonturen anderen Teilbereichen vorgelagert sind. Zumindest Teilbereiche sind damit nicht (vollständig) quer, d. h. senkrecht zur Strömungsrichtung orientiert, sondern vielmehr unter einem Winkel kleiner 90 ° zur Strömungsrichtung geneigt. Wellenfronten in dem Strömungsmedium treffen damit zeitlich versetzt auf die Teilbereiche. Nach ersten Abschätzungen kann infolge der erfindungsgemäßen mäanderförmigen Ausgestaltung des Trag- oder Leitelementes der Wellenwiderstand sowie die Gleitzahl (Verhältnis des Auftriebes zum Widerstand) um zwischen 40 % und 70 % verbessert werden.

Bei einer Anströmung im Zusammenhang mit Überschallgeschwindigkeiten des fliegenden Objektes werden Verdichtungsstöße hervorgerufen, die zwischen benachbarten Trag- oder Leitelementen oder hinter diesen zur Überlagerung kommen. Als Folge der mäanderförmigen Ausgestaltung der Stirnkontur(en) können die Interferenzmuster aufgrund der Überlagerungen der Verdichtungsstöße beeinflusst werden.

Erfindungsgemäß ergeben sich die folgenden weiteren Vorteile:

- Der erste physikalische Effekt der mäanderförmigen Ausbildung ergibt sich hinsichtlich des Kompressibilitätsfaktors. Mit wachsendem Anstellwinkel steigen Störgeschwindigkeiten und Druckbeiwerte weniger stark an.

- In Näherung wird nur die Strömungskomponente senkrecht zur Stirnkontur gestört. Die Geschwindigkeitskomponente parallel zur Stirnkontur bleibt ungestört. Eine Überlagerung von ungestörter Strömungskomponente und gestörter Komponenten senkrecht zur Vorderkante ergibt einen gekrümmten Stromlinienverlauf. Als zweiter physikalischer Effekt kann daher festgestellt werden, dass kritische Strömungsbedingungen erst entstehen, wenn die Strömungskomponente senkrecht zur Stirnkontur Schallgeschwindigkeit erreicht. Dabei ist die effektive Machzahl der Umströmung (Projektion auf diese Richtung) immer kleiner als die echte Flugmachzahl. Die effektive Machzahl bestimmt die Kraftbeiwerte eines vergleichbaren schiebenden Flügels, die bei einer Berechnung nur auf den Staudruck der echten Strömung umgerechnet werden müssen. Das bewirkt eine Reduzierung der Auftriebs- und Widerstandsbeiwerte. Dabei nimmt der Widerstand aber deutlich schneller ab als der Auftrieb. So ist zu erwarten, z. B. bei sehr kleinen Anstellwinkeln, dass der Auftriebsbeiwert direkt proportional dem $\cos^2(\lambda)$ und der Widerstandsbeiwert dem $\cos^3(\lambda)$ sind, wobei $\lambda$ für den entsprechenden lokalen Pfeilwinkel steht. Entsprechend soll bei gleichen Strömungsbedingungen das Verhältnis des Auftriebs zum Widerstand (die Gleitzahl) beim erfindungsgemäß gepfeilten Trag- oder Leitelement (Gleitzahl_neu) immer größer als bei einem herkömmlichen Trag- oder Leitelement (Gleitzahl_alt) sein, so dass die Gleichung

$$\text{Gleitzahl\_neu} = \text{Gleitzahl\_alt}/\cos(\lambda)$$

in Näherung gelten sollte. Bei einer effektiven Machzahl < 1 (Unterschall Vorderkante) kann der Gesamtwiderstand noch weiter reduziert werden, da bei einer entsprechenden Form des Flügelprofils der Effekt des "Vorderkantensogs" auftreten würde, der bei Unterschallanströmung von Planarflügeln bekannt ist (siehe [2]).

Die Abbrandgefahr der Trag- oder Leitelemente bei Hyperschallfluggeschwindigkeiten fordert dickere und stumpfere Vorderkanten bei der konstruktiven Auslegung der Trag- oder Leitelemente. Diese Maßnahmen führen zu einem zusätzlichen Wellenwiderstand der herkömmlichen Trag- oder Leitelemente, die für den Einsatz bei hohen Geschwindigkeiten ausgelegt werden. Durch die erfindungsgemäße Ausgestaltung kann eine wesentlich kleinere effektivere Machzahl an den Kanten der Trag- oder Leitelemente erreicht werden. Hierdurch können die befürchteten Abbrandvorgänge vermieden werden. Dies ermöglicht den Einsatz von spitzeren oder dünneren Kanten, wodurch der Wellenwiderstand noch weiter reduziert werden kann.

Die mäanderförmigen Kanten, die insbesondere hin- und hergehend ausgebildet sind, können einen beliebigen kurvenförmigen Verlauf aufweisen. Durch eine geeignete Auswahl der Kurvenform kann gezielt den Fertigungsbedingungen, den Festigkeitsanforderungen, den im Flugbetrieb zu erwartenden Strömungsgeschwindigkeiten bzw. den Strömungsgeschwindigkeitsprofilen, der gewünschten Superposition der Verdichtungsstöße, den Einbaubedingungen und/oder einer vertretbaren Profiltiefe Rechnung getragen werden. Teilbereiche unterschiedlicher Steigungen (mit kontinuierlichem Steigungsverlauf oder mit mehreren diskreten Steigungswerten) können hierbei einem Geschwindigkeitsprofil, beispielsweise für einen Startvorgang des fliegenden Objektes, oder für diskrete bevorzugte Geschwindigkeitsbereiche des fliegenden Objektes angepasst werden. Die Kanten entsprechend der Erfindung können vollständig oder nur in einem oder mehreren Teilbereichen mäanderförmig ausgebildet sein.

Erfindungsgemäß ist das Trag- oder Leitelement Teil eines Gitterflügels. Die Vor- und Hinterkanten und die Stirnkontur des Gitterflügels sind mit Lamellenflügeln des Gitterflügels gebildet, die einen Strömungskanal begrenzen. In einem derartigen Fall besitzen die Lamellenflügel u. U. mit geringer Dimensionen oder eine geringere Dicke als für den Einsatz bei Lufteinlaufbereich.

Derartige Gitterflügel sind beispielsweise aus den Druckschriften

(Belotserkovskii S.M. et al., GITTERFLÜGEL (in Russisch: RESCHET- [3] SCHATYE KRYL'JA), Moskau, Maschinostroenie, 1985, 320 S (in Russisch) (englische Übersetzung: Lattice Wings, also called wings with internal framework, machine translated by: Foreign Technology Division United States Airforce, smooth translated original text, errors corrected and retyped by Missile And Space Intelligence Center United States Army, 1985, T.E. Martin, R.T. Wintey, D. Kleenias),

Böhm G., Aerodynamische Grundlagen und Eigenschaften von Gitterflügeln zur [4] Steuerung von Lenkflugkörpern, IABG-Bericht B-WT 4719/02, 67 S., IABG, Ottobrunn, 1994,

Washington W.D. and Miller M.S., An Experimental Investigation of Grid Fin [5] Drag Reduction Techniques, AIAA Paper, 93-0035, 31st Aerospace Sciences Meeting & Exhibit, Jan. 11-14, Reno, NV 1993,

Washington W.D. and Miller M.S., Experimental Investigations of Grid Fin [6] Aerodynamics: A Synopsis of Nine Wind Tunnel and Three Flight Tests. MISSILE AERODYNAMICS, RTO-MP-5, 1998, pp. 10-1 - 10-14,

Fournier E.Y., Wind Tunnel Investigation of Grid Fin and Conventional Planar [7] Control Surfaces, AIAA Paper, 2001-0256, 39st Aerospace Sciences Meeting & Exhibit, Jan. 8-11, Reno, NV, 2001, sowie

aus der EP 829 424 B1 [8]

sowie aus der eingangs genannten US 6,073,879
bekannt.

Die bekannten Gitterflügel weisen Lamellenflügel auf. Unter Lamellenflügeln werden im Zusammenhang mit Gitterflügeln insbesondere gitterartig angeordnete dünne Trag- bzw. Leitflächen verstanden. Die Lamellenflügel sollen das aerodynamische Verhalten eines den Gitterflügel tragenden fliegenden Objektes, insbesondere eines Flugzeuges, ein Geschosses, einer Rakete, eines Flugkörpers oder eines Flugobjektes der Raumfahrt, in einer gewünschten Weise beeinflussen sollen. Mehrere derartige Lamellenflügel sind gitterartig derart miteinander verbunden, dass sie Strömungskanäle allseitig begrenzen, beispielsweise in Form von Kastenflügeln oder Gitterflügelzellen.

Im Vergleich zu konventionellen Flügelkonstruktionen, insbesondere Planarflügeln, können mit Gitterflügeln bei geringem Gewicht und kleinen Gesamtabmessungen große wirksame Flächen der Lamellenflügel bereitgestellt werden, so dass mit Gitterflügeln eine effektive Möglichkeit zur Herbeiführung von gewünschten aerodynamischen Charakteristika gegeben ist. Es hat sich weiterhin gezeigt, dass sich durch eine gegenseitige Beeinflussung benachbarter Lamellenflügel und durch hieraus resultierende benachbarte Längs- und Querkomponenten der sich ausbildenden Strömungen im Vergleich zu herkömmlichen Flügelkonstruktionen einheitlichere Strömungsbedingungen ergeben. Bei hinreichend hohen supersonischen Geschwindigkeiten eines fliegenden Objektes arbeitet der gesamte Flügel in einem Zustand mit im Wesentlichen paralleler Durchströmung. Während herkömmliche Flügel über aerodynamisch wirksame Außenflächen und eine innere Tragstruktur verfügen, sind die Lamellenflügel multifunktional ausgebildet, da sie sowohl der Beeinflussung der aerodynamischen Verhältnisse dienen als auch als Tragstruktur dienen. Durch die fachwerkartige Ausbildung der Gitterflügel ergibt sich eine hohe Steifigkeit, ein großes Flächenträgheitsmoment und ein großes Torsionswiderstandsmoment.

Aus [3] sind schalenförmige Gitterflügel bekannt, welche gekrümmt ausgebildet sind, damit sie sich an eine zylinderförmige Mantelfläche eines Flugkörpers anlegen lassen. Zur Strömungsbeeinflussung lassen sich diese Gitterflügel vom Flugkörper wegklappen (Fig. V.7).

Die genannten Vorteile der mäanderförmigen Ausbildung der Kanten der Stirnkontur können mit den Vorteilen einer grundsätzlich bekannten gepfeilten Ausbildung der Stirnkontur kombiniert werden, wenn gemäß einer bevorzugten Ausgestaltung der Erfindung die Stirnkontur zusätzlich zu der lokal mäanderförmigen Stirnkontur global gepfeilt ist. Dieses bedeutet, dass in einem kleinen Maßstab quer zur Strömungsrichtung die Stirnkontur mäanderförmig, beispielsweise mit einer Zahnkontur, ausgebildet ist (also mit einer "Wellenlänge" des mäanderförmigen Verlaufes, die kleiner ist als die Länge der Kante), während in einem größeren Maßstab die Stirnkontur oder eine "mittlere Stirnkontur" nicht quer zur Strömungsrichtung orientiert ist, sondern die Längsachse des Fluggerätes und eine globale, mittlere Hilfslinie zu der Kante des Trag- oder Leitelementes einen spitzen Winkel einschließen, welcher entgegen der Flugrichtung geöffnet ist.

Gemäß einer weiteren erfindungsgemäßen Ausgestaltung des Trag- oder Leitelementes weist die Stirnkontur quer zu dem mäanderförmigen Verlauf ein von dem Tragelement vorstehendes Maximum sowie zwei abseits des Maximums oder außenliegende Minima auf. Damit weist die Stirnkontur in Strömungsrichtung vorstehende Gipfel auf, welche von Tälern umgeben sind, die einerseits durch die außen liegenden Minima, insbesondere im Bereich der Ober- und Unterseite des Trag- oder Leitelementes, sowie die zurückliegenden Bereiche der mäanderförmigen Kanten verlaufen. Dies hat zur Folge, dass nicht nur in eine Längsrichtung der Stirnkontur eine lokale Pfeilung vorgesehen ist, sondern auch in einer Querrichtung der Stirnkontur. Zwischen den vorgenannten Minima und dem Maximum können in Querrichtung keine weiteren Extrema vorgesehen sein oder aber weitere Extrema, so dass sich auch in Querrichtung mehrere Gipfel und Täler ergeben.

Vorzugsweise sind die Maxima und die Minima in Querrichtung über einen kurvenförmigen Verlauf, insbesondere eine Gerade, einen konkaven Verlauf, einen konvexen Verlauf oder einen parabelförmigen Verlauf verbunden.

Besonders einfache Herstellungsbedingungen bei guten zu erzielenden aerodynamischen Eigenschaften ergeben sich, wenn die Stirnkontur in Längsrichtung mit Geradenabschnitten ausgebildet ist, welche Maxima und Minima der Stirnkontur, die gleiche oder variable Abstände voneinander aufweisen, miteinander verbinden. Unter Maxima und Minima werden im Sinne der Erfindung lokale Extrema der Stirnkontur in Längsrichtung derselben verstanden, die bei Blickrichtung in Strömungsrichtung lokal am weitesten vorne bzw. hinten liegen. Übergänge zwischen den Geradenabschnitten können spitz oder abgerundet ausgebildet sein. Hierbei kann die Strömungskontur zwischen zwei Minima symmetrisch ausgebildet sein zu einer Achse die durch das Maximum verläuft und ungefähr in Strömungsrichtung orientiert ist. Alternativ ist es möglich, dass die Stirnkontur in einem solchen Bereich unsymmetrisch zu der vorgenannten Achse ausgebildet ist, so dass sich für die jeweiligen Geradenabschnitte unterschiedliche Steigungen ergeben. Dieses ist insbesondere dann von Vorteil, wenn das Trag- oder Leitelement zumindest in Teilbetriebsbereichen derart angestellt ist, dass dieses so angeströmt wird, dass das Strömungsmedium unter einem Winkel zu der vorgenannten Achse auf das Trag- oder Leitelement trifft und hierdurch die Unterschiede der Steigungen dieser Winkel zumindest teilweise wieder ausgeglichen werden.

Besonders vorteilhaft ist es hierbei, wenn die Geradenabschnitte oder die Stirnkontur zwischen Maxima und Minima eine (mittlere oder absolute) Pfeilung zwischen 20° und 80° (insbesondere 70°) aufweist, gemessen gegenüber der Normalen zur Strömungsrichtung. Der Pfeilwinkel sollte jeweils auf ein erwartetes Fluggeschwindigkeitsprofil abgestimmt werden. Der vorgeschlagene Bereich der Pfeilung hat sich als besonders effektiv bei gepfeilten Planarflügeln erwiesen. Erfindungsgemäß erfolgt eine Übertragung dieses erfolgreichen Bereiches auf Trag- und Leitelemente.

Für eine bevorzugte Ausgestaltung des Gitterflügels verfügt die Stirnkontur im Bereich eines Strömungskanals in einem Randbereich des Strömungskanals über ein Minimum sowie im anderen Randbereich des Strömungskanals über ein Maximum. Demgemäß wird jeweils eine Verbindungslinie oder ein Geradenabschnitt zwischen zwei Extrema im Bereich eines Strömungskanals gebildet. Hierbei kann der Übergang von einem Strömungskanal zum benachbarten Strömungskanal über identische Maxima oder über identische Minima eines Strömungskanals und eines benachbarten Strömungskanals erfolgen (zickzackförmige Kontur; die "Wellenlänge" der Stirnkontur entspricht der zweifachen Breite eines Strömungskanals im Bereich des Lamellenflügels) oder aber in einem Sprung von einem Minimum eines Strömungskanals zu einem Maximum des benachbarten Strömungskanals erfolgen (sägezahnförmige Kontur; die "Wellenlänge" der Stirnkontur entspricht der Länge eines Strömungskanals im Bereich des Lamellenflügels). Dieser Ausgestaltung liegt die Erkenntnis zugrunde, dass eine Erstreckung einer Zahnflanke über mehr als einen Strömungskanal zu keiner erkennbaren Verbesserung der aerodynamischen Verhältnisse führt, aber eine Vergrößerung des Abstandes der Maxima und der Minima der Stirnkontur zur Folge hat. Eine derartige Vergrößerung des Abstandes der Extrema hat aber negative Auswirkungen auf die Abmessungen der Lamellen in Strömungsrichtung und damit auf die Bautiefe des Gitterflügels.

Bei einem weiteren erfindungsgemäßen Gitterflügel weisen Lamellenflügel im Bereich eines Strömungskanals (mittig oder außermittig) ein Maximum sowie in den Randbereichen desselben Strömungskanals jeweils ein Minimum auf. Demgemäß wird im Bereich des Strömungskanals ein "Zahn" mit einem Maximum bzw. Minimum und einem Paar von benachbarten Geradenabschnitten gebildet. Alternativ ist es im Rahmen der Erfindung möglich, dass die Stirnkontur im Bereich eines Strömungskanals mehrere Maxima und mehrere Minima aufweist. Gemäß einer weiteren Alternative weist die Vorderkantenkontur ein Minimum in der Mitte eines Strömungskanales auf und jeweils ein Maximum an den Randbereichen des Strömungskanales. Durch die Zahl der im Bereich eines Strömungskanals angeordneten Extrema kann die Länge der Verbindungslinie oder des Geradenabschnitts vorgegeben werden. Bei infolge der gewünschten aerodynamischen Wirkung vorgegebener Steigung der Geradenabschnitte wird durch die Zahl der Extrema über die Länge der Geradenabschnitte auch der erforderliche Abstand der Extrema in Strömungsrichtung vorgegeben. Sind daher Stirnkonturen mit geringen Erstreckungen in Strömungsrichtung gewünscht, beispielsweise zur Erzielung kleiner Abmessungen der Gitterflügel in Strömungsrichtung und/oder zur Erzielung guter mechanischer Eigenschaften des Gitterflügels, so findet erfindungsgemäß eine vergrößerte Zahl von Extrema Einsatz. Dieses ist insbesondere von Vorteil, wenn eine große Steigung der Geradenabschnitte erforderlich ist.

Nach einem weiteren Vorschlag der Erfindung sind die Lamellenflügel in einem Rahmen gelagert. Der Rahmen kann zur Erhöhung der Steifigkeit dienen sowie einer Anbindung des Lamellenflügels an das fliegende Objekt. Ist eine Veränderung der Anstellung des Lamellenflügels gegenüber dem fliegenden Objekt und damit gegenüber der Anströmung vor Inbetriebnahme oder im Betrieb des fliegenden Objekts erwünscht, kann der Gitterflügel insgesamt beweglich an dem fliegenden Objekt abgestützt sein, beispielsweise über ein Schwenkscharnier und eine geeignete Stelleinrichtung. Nach einer Weiterbildung der Erfindung ist auch der Rahmen multifunktional gestaltet, indem mindestens eine Stirnkontur des Rahmens mäanderförmig ausgebildet ist. In diesem Fall übernimmt der Rahmen neben den vorgenannten Funktionen auch eine Beeinflussung der aerodynamischen Verhältnisse und verstärkt/ergänzt damit die Wirkung der mäanderförmigen Lamellenflügel.

Vorteilhafte Weiterbildungen des erfindungsgemäßen Gitterflügels ergeben sich aus den Unteransprüchen, der Beschreibung und den Zeichnungen.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1    zeigt eine räumliche Darstellung eines Ausführungsbeispiels eines erfindungs- gemäßen Trag- oder Leitelementes, hier eines Gitterflügels,

Fig. 2    zeigt eine Vorderansicht des in Fig. 1 dargestellten Gitterflügels,

Fig. 3    zeigt eine Seitenansicht eines erfindungsgemäßen Trag- oder Leitelementes mit einem Rahmen mit ebenen Stirnkonturen,

Fig. 4    zeigt einen erfindungsgemäßen Lamellenflügel oder ein Trag- oder Leit- element mit einer mäanderförmigen Stirnkontur und einer gegenüberliegenden geradlinig ausgebildeten Stirnkontur,

Fig. 5    zeigt ein Trag- oder Leitelement mit zwei mäanderförmig ausgebildeten Stirn- konturen,

Fig. 6    zeigt schematisch verschiedene erfindungsgemäße Stirnkonturen und

Fig. 7    zeigt ein erfindungsgemäßes Trag- oder Leitelement mit einer in Längs- richtung mäanderförmigen Stirnkontur und einer abgeschrägten Ausbildung in Querrichtung,

Fig. 8    zeigt das Trag- oder Leitelement gemäß Figur 7 in geschnittener Ansicht bei Schnittführung in der Ebene VIII-VIII,

Fig. 9    zeigt ein weiteres Trag- oder Leitelement mit in Längsrichtung mäander- förmiger Stirnkontur und einer Abschrägung in Querrichtung,

Fig. 10    zeigt das Trag- oder Leitelement gemäß Fig. 9 in geschnittener Ansicht bei Schnittführung in der Ebene X-X,

Fig. 11    zeigt ein herkömmliches Triebwerk mit radial außen liegendem Ringflügel,

Fig. 12    zeigt ein Triebwerk, bei dem der Ringflügel mäanderförmig ausgebildet ist,

Fig. 13    zeigt einen herkömmlichen Lufteinlauf eines Fluggerätes in räumlicher Darstellung,

Fig. 14    zeigt einen Lufteinlauf für ein Fluggerät in räumlicher Darstellung, bei dem Vorderkanten mäanderförmig ausgebildet ist,

Fig. 15    zeigt einen Flugkörper mit einer globalen Pfeilung der Vorderkanten sowohl des Tragwerkes als auch des Leitwerkes und

**Fig. 16** zeigt einen Flugkörper mit lokal mäanderförmigen sowie global gepfeilten Vorder- und Hinterkanten des Tragwerkes sowie des Leitwerkes.

## FIGURENBESCHREIBUNG

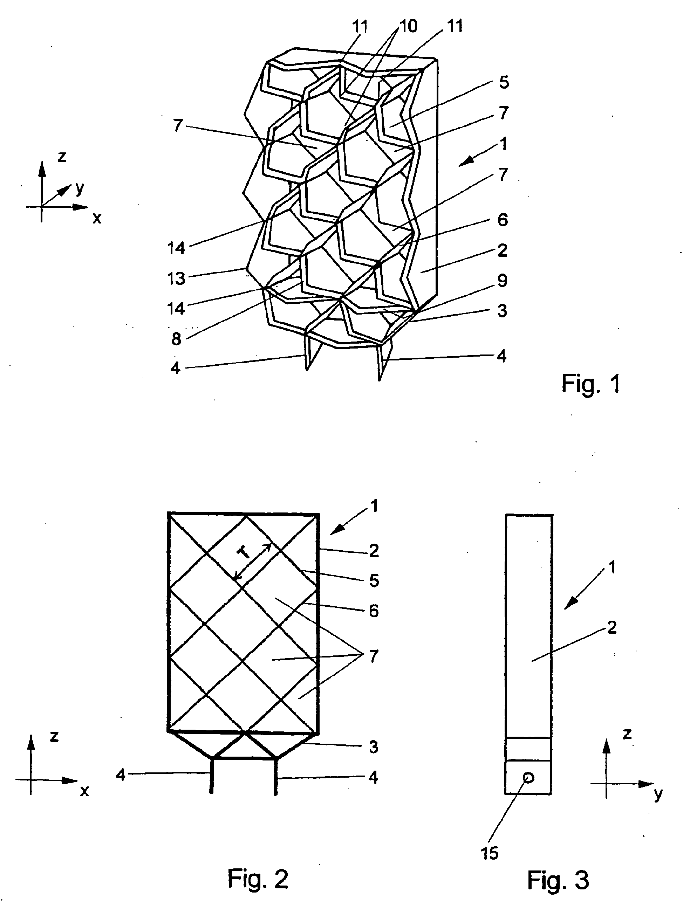

Im Folgenden wird zunächst die Erfindung für ein Anwendungsbeispiel, hier einen Gitterflügel 1, dargestellt. Eine Kombination von in den einzelnen Figuren 1 bis 10 und für unterschiedliche Anwendungsfälle dargestellten Merkmalen ist möglich.

Ein Gitterflügel 1 ist fest, verdrehbar oder verschwenkbar bspw. mit einem fliegenden Objekt, insbesondere einem Fluggerät wie einem Luftfahrzeug, einem Flugzeug, einem Geschoss, einer Rakete, einem Flugkörper oder einem Flugobjekt der Raumfahrt, verbunden. Der Gitterflügel 1 besitzt einen Rahmen 2, welcher in dem in Fig. 1 dargestellten Ausführungsbeispiel ungefähr rechteckförmig ausgebildet ist mit einer Verjüngung 3 im unteren Bereich, welche in zwei Halteelemente 4 übergeht. In dem Rahmen 2 sind jeweils parallele Lamellenflügel 5 sowie Lamellenflügel 6, die zueinander gitterartig angeordnet sind, gehalten. Zwischen den Lamellenflügeln 5, 6 sind rechteckförmige oder quadratische Strömungskanäle 7 gebildet.

Der Gitterflügel gemäß Fig. 1 wird in Richtung der skizzierten Achse y durchströmt. Abweichend kann der Gitterflügel 1 gegenüber der Achse y angestellt sein. Die Lamellenflügel 5, 6 weisen Vorderkanten mit Stirnkonturen 8, 9 auf, welche zickzackförmig bzw. mäanderförmig, also hin- und hergehend verlaufend, ausgebildet sind. Gemäß Fig. 1 verfügen die Lamellenflügel 5, 6 im Bereich eines Strömungskanals 7 jeweils mittig über ein Maximum 10 sowie im Randbereich, in dem ein senkrecht verlaufender Lamellenflügel 6, 5 schneidet, über ein Minimum 11.

Der Rahmen 2 besitzt ebenfalls eine zickzackförmige bzw. mäanderförmige Stirnkontur 12 mit Maxima 13 und Minima 14. Eine Anbindung der Lamellenflügel 5, 6 erfolgt im Bereich der Minima 14 des Rahmens 2 an diesen, wobei die Lamellenflügel 5, 6 im Bereich der Anbindungspunkte Minima 11 aufweisen. Die Maxima 13 des Rahmens 2 und die Maxima 10 der Lamellenflügel 5, 6 sowie die Minima 14 des Rahmens 2 und die Minima 11 der Lamellenflügel 5, 6 sind jeweils korrespondierend ausgebildet und liegen jeweils in einer Ebene.

Gemäß Fig. 2 ist eine Abmessung des Strömungskanals 7 mit T bezeichnet, welche somit dem Abstand paralleler Lamellenflügel 5 entspricht und die "Rasterbreite" des von den Lamellenflügeln 5, 6 vorgegebenen Gitters angibt.

Abweichend zur Fig. 1 verfügt der Rahmen 2 gemäß Fig. 3 über ebene Stirnkonturen, während die Lamellenflügel 5, 6, die in Fig. 3 verdeckt sind, mäanderförmig ausgebildet sind. Die Halteelemente 4 verfügen über Bohrungen 15, in welchen eine Achse zur schwenkbaren Lagerung des Gitterflügels 1 gegenüber dem fliegenden Objekt Aufnahme finden kann.

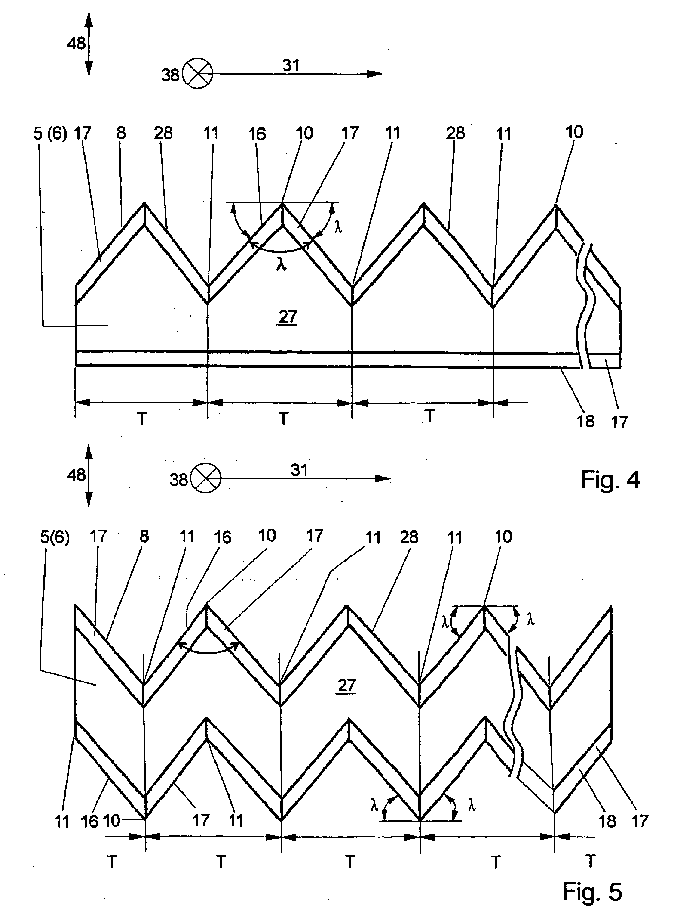

Fig. 4 zeigt einen Lamellenflügel 5 (oder 6). Die Maxima 10 und Minima 11 der Stirnkontur 8 sind jeweils über Geradenabschnitte 16, 28 miteinander verbunden. Im Bereich eines Strömungskanals 7 besitzt damit der Lamellenflügel 5 eine Stirnkontur 8, welche ein Minimum 11, einen Geradenabschnitt 16, ein Maximum 10, eine Geradenabschnitt 28 und ein Minimum 11 aufweist, wodurch ein Zahn gebildet ist. Der Pfeilwinkel $\lambda$, welcher von den Geradenabschnitten 16,28 gegenüber einer Senkrechten zur Strömungsrichtung gebildet ist, beträgt hierbei vorzugsweise zwischen 20° und 70°, insbesondere 30° bis 60°, beispielsweise 40° bis 50°.

Der Lamellenflügel 5 ist aus einem Blech gefertigt mit konstanter Dicke, wobei das Blech im Bereich der Stirnkontur 8 beidseitig des Bleches eine Phase 17 aufweist, welche sich über die gesamte Länge der Stirnkontur 8 erstreckt. Die Lamellenflügel 5, 6 sind somit im Querschnitt sechseckig ausgebildet mit vier jeweils paarweise aneinander anschließenden Phasen 17 und zwischen den Phasen 17 angeordneten parallelen Grundflächen 27. Für das in Fig. 4 dargestellte Ausführungsbeispiel ist die Stirnkontur 8 des Lamellenflügels 5 mäanderförmig ausgebildet, während die gegenüberliegende Stirnkontur 18 geradlinig ausgebildet ist. Bei der Stirnkontur 8 handelt es sich um eine von der Vorder- oder Hinterkante gebildete Stirnkontur, während die Stirnkontur 18 einer Hinter- oder Vorderkante zugeordnet ist.

Abweichend zu dem in Fig. 4 dargestellten Ausführungsbeispiel ist gemäß dem in Fig. 5 dargestellten Ausführungsbeispiel auch die Stirnkontur 18 mäanderförmig ausgebildet, wobei für die Stirnkontur 18 das für die Stirnkontur 8 gemäß Fig. 4 Gesagte gilt. Die Maxima 10 und Minima 11 der Stirnkonturen 8, 18 sind in Richtung der Achse y zueinander fluchtend angeordnet.

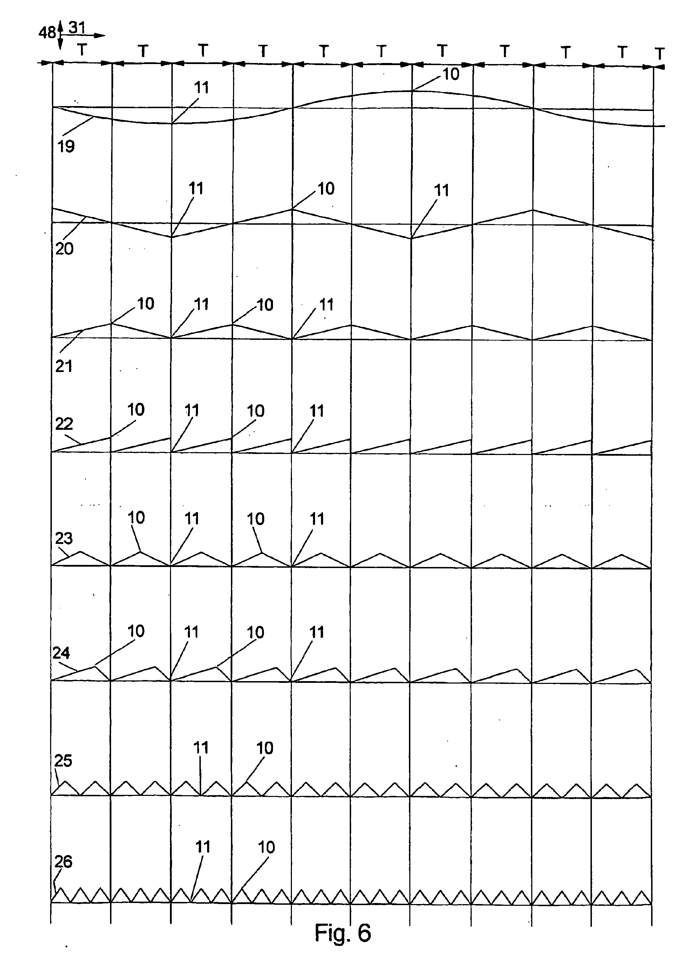

Fig. 6 zeigt mögliche alternative Ausgestaltungen einer Stirnkontur 8, 9, 12 und/oder 18:

a) Der Kurvenverlauf 19 einer Stirnkontur ist kurvenförmig wie beispielsweise sinusförmig ausgebildet. Der Abstand benachbarter Minima 11 für den Kurvenverlauf 19 beträgt 8 T.

b) Der Kurvenverlauf 20 ist zickzackförmig ausgebildet, wobei Minima 11 und Maxima 10 durch Geradenabschnitte verbunden sind, die Maxima 10 jeweils mittig zwischen benachbarten Minima 11 liegen und der Abstand benachbarter Maxima 4 T beträgt.

c) Der Kurvenverlauf 21 ist zickzackförmig entsprechend Kurvenverlauf 20 ausgebildet, wobei der Abstand benachbarter Maxima 10 lediglich 2 T beträgt. Der Vergleich mit Kurvenverlauf 20 zeigt, dass bei gleicher Anstellung von den zwischen Maxima 10 und Minima 11 angeordneten Gradenabschnitten der Abstand der Maxima 10 und Minima 11 in Strömungsrichtung halbiert ist.

d) Der Kurvenverlauf 22 ist sägezahnförmig ausgebildet. In gegenüberliegenden Randbereichen eines Strömungskanals besitzt die Stirnkontur jeweils ein Minimum 11 und ein Maximum 10, welche durch einen Geradenabschnitt verbunden sind. Von dem Maximum 10 springt die Stirnkontur unmittelbar zum Minimum 11 des benachbarten Strömungskanals.

e) Der Kurvenverlauf 23 ist zickzackförmig entsprechend Kurvenverlauf 20 ausgebildet, wobei der Abstand benachbarter Maxima 10 lediglich T beträgt.

f) Der Kurvenverlauf 24 ist zickzackförmig ausgebildet, wobei der Abstand von einem Maximum 10 zu einem Minimum 11 kleiner ist als der Abstand von einem Minimum 11 zum nächsten Maximum 10, so dass die Geradenabschnitte der Stirnkontur unterschiedliche Längen aufweisen. Der Abstand benachbarter Maxima 10 ist T.

g) Kurvenverlauf 25 ist zickzackförmig entsprechend Kurvenverlauf 20 ausgebildet, wobei der Abstand benachbarter Maxima 10 lediglich T/2 beträgt.

h) Der Kurvenverlauf 26 ist zickzackförmig entsprechend Kurvenverlauf 20 ausgebildet, wobei der Abstand benachbarter Maxima 10 lediglich T/3 beträgt.

Die in Fig. 6 dargestellten Stirnkonturen sind alternativ mit grundsätzlich gleicher Form, aber mit abweichenden Abständen der Maxima 10 und Minima 11, mit Verschiebungen der Stirnkonturen gegenüber dem Gittermuster und den Strömungskanälen 7, mit Abrundungen und/oder mit unterschiedlichen oder beliebigen Verbindungslinien der Maxima 10 und Minima 11 einsetzbar. Für gegenüberliegende Stirnkonturen 8, 18 können gleiche oder unterschiedliche Kurvenverläufe Einsatz finden.

Fig. 1 zeigt lediglich eine mögliche Ausführungsform der Grundform des Gitterflügels 1 mit rechteckförmiger und ebener Grundform und jeweils gleichen rechteckförmigen oder quadratischen Strömungskanälen. Abweichend hiervon sind beliebig geformte oder gekrümmte Gitterflügel möglich, die mäanderförmige Stirnkonturen 8, 9, 12, 18 aufweisen. Hinsichtlich beispielhafter möglicher Gitterflügelformen wird auf den eingangs angeführten Stand der Technik [1] verwiesen, in welchem in Fig. 2.11, Fig. V.1, Fig. V.2, Fig. V.7 und Fig. 1.1 verschiedene Grundformen von Gitterflügeln dargestellt sind, welche ebenfalls mit erfindungsgemäßen mäanderförmigen Stirnkonturen versehen werden können.

Die Lamellenflügel 5, 6 können durchgehend über mehrere Strömungskanäle 7 ausgebildet sein. In diesem Fall ist es möglich, dass die Lamellenflügel 5, 6 über in Richtung der Achse y orientierte Schlitze verfügen, über welche die Lamellenflügel 5, 6 gitterartig ineinander gesteckt werden können. Alternativ oder zusätzlich kann ein Verschweißen der Lamellenflügel 5, 6 erfolgen. Ebenfalls denkbar ist es, dass die Lamellenflügel 5, 6 aus mehreren Einzelelementen aufgebaut sind, die beispielsweise stoffschlüssig miteinander verbunden sind. Hinsichtlich der Verbindung einzelner Lamellenflügel 5, 6 sind alternative Ausführungsformen in dem Stand der Technik [1], vgl. Fig. 1.7, dargestellt.

Hinsichtlich der Querschnittsformen der Lamellenflügel 5, 6 sind abweichend von dem sechseckförmigen Querschnitt mit vier Phasen 17 gemäß den Fig. 4 und 5 diamantförmige bzw. sechseckige Querschnitte, viereckige Querschnitte, dreieckige Querschnitte, sinusförmige Querschnitte, mit Kreisbögen oder Parabelbögen geformte Querschnitte oder unsymmetrische parabolische Querschnitte denkbar, vgl. Stand der Technik [1], Tabelle 4.1.

Die Strömungskanäle 7 können über abweichende Konturen, Querschnittsflächen und/oder Orientierungen gegenüber dem Rahmen 2 verfügen. Möglich ist weiterhin die Ausbildung mehrerer unterschiedlicher Strömungskanäle 7 bei einem Gitterflügel.

Die Gitterflügel 1 finden vorzugsweise Einsatz als Flugstabilisiereinrichtungen, Leitwerke, Tragflächen oder als so genannte "Hydrofoils". Der Einsatz der Gitterflügel erfolgt insbesondere in subsonischen, transsonischen und/oder supersonischen Geschwindigkeitsbereichen.

In den dargestellten Ausführungsformen korreliert T für einen Gitterflügel mit der Breite eines Strömungskanales. Für einen Gitterflügel ist die Wellenlänge der mäanderförmigen Stirnfläche insbesondere kleiner oder gleich 2 T, vorzugsweise kleiner oder gleich 1 T. Insbesondere ist die Wellenlänge kleiner als die Gesamtbreite des Gitterflügels oder des Rahmens oder der Gesamterstreckung in Richtung der Lamellenflügel.

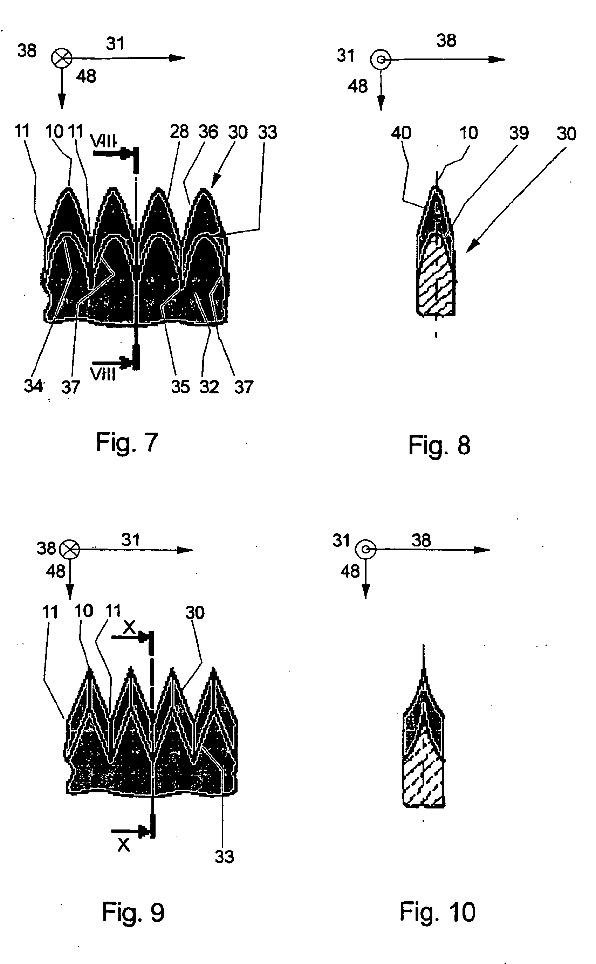

Fig. 7 zeigt ein Trag- oder Leitelement 29 mit dem mäanderförmigen Verlauf einer Stirnkontur 30 in Längsrichtung 31. Gemäß Fig. 7 ist die Phase 17 entsprechend der vorangehenden Ausführungsformen nicht eben ausgebildet, sondern als gewölbte oder gekrümmte Fläche. In dem Übergang dieser Fläche zu einer Seitenfläche 32 ist eine Übergangskontur 33 gebildet, die über Maxima 34 und Minima 35 verfügt. In der Ansicht gemäß Fig. 7 sind die Maxima 34 der Übergangskontur 33 und die Maxima 10 der Stirnkontur 30 vertikal fluchtend zueinander ausgerichtet. Eine Verbindungskontur 36 der Stirnkontur 30, die die Maxima 10 und Minima 11 verbindet, ist ungefähr parabelförmig oder elliptisch ausgebildet mit leichter Krümmung. Ebenfalls die Übergangskontur 33 besitzt entsprechende Verbindungskonturen 37. Sowohl die Stirnkontur 30 als auch die Übergangskontur 33 ist mit einem kontinuierlichen Übergang zwischen diesen in Querrichtung 38 mäanderförmig oder mit mehreren über die Längsrichtung 31 verteilten Zähnen ausgebildet, die in Querrichtung 38 aus dem Trag- oder Leitelement 29 hervorspringen. Der Schnitt VIII-VIII gemäß Fig. 8 zeigt hierbei das geschnittene Material im Bereich der Minima 11, 35 mit der Kontur 39 in Querrichtung 38 sowie die nicht geschnittenen "Zähne" im Bereich der Maxima 10, 34 mit der Kontur 40 in Querrichtung 38. Die Konturen 39, 40 sind gemäß Fig. 8 leicht konvex ausgebildet. Für das in den Figuren 7 und 8 dargestellte Ausführungsbeispiel korrespondieren die Maxima 34 ungefähr mit den Minima 11, wobei dieses nicht zwingend der Fall ist.

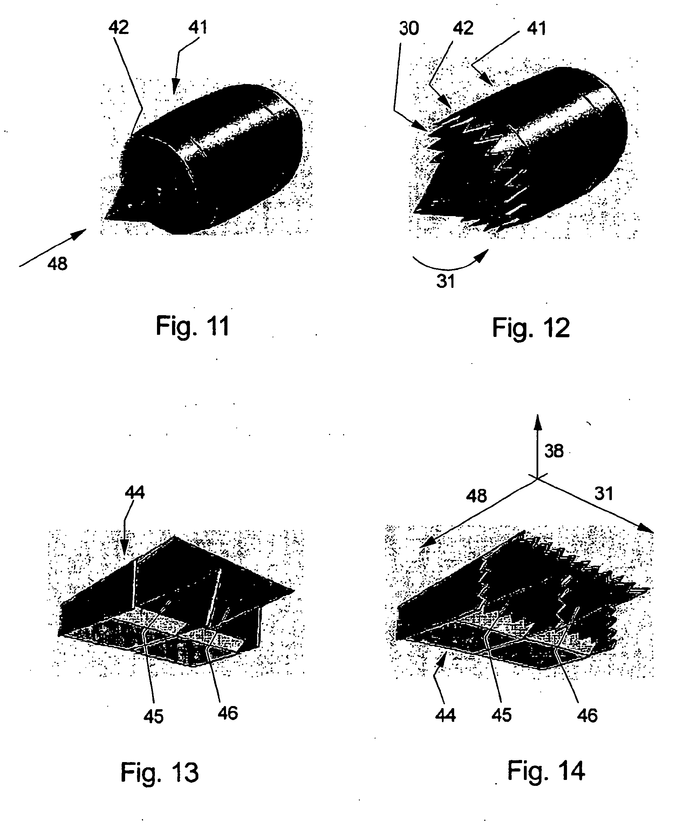

In den Fig. 9 und 10 ist eine weitere Ausführungsform eines Trag- oder Leitelementes 29 dargestellt, bei dem die Stirnkontur 30 sowie die Übergangskontur 33 jeweils mit ungefähr teillinearen Teilbereichen zwischen den Maxima 10 und Minima 11 bzw. Maxima 34 und Minima 35 ausgebildet ist. In Querrichtung 38 sind die Stirnkontur 30 und die Übergangskontur 33 gemäß Fig. 11 über eine Kontur 39 verbunden, die beidseits der Minima 11 konvex ausgebildet ist. Ebenso ist die Kontur 40 beidseitig der Maxima 10 konvex ausgebildet, so dass sich eine leicht gekrümmte "Phase" 17 ergibt. Aus den Ausführungsformen gemäß Fig. 8 bzw. Fig. 10 ist des weiteren ersichtlich, dass die Spitzen der Zähne, zumindest in Querrichtung, spitz oder abgerundet ausgebildet sein können.

Die Maxima 10 sowie 34 und die Minima 11 sowie 35 sind in den Ausführungsformen gemäß Fig. 7 bis 10 grundsätzlich in Querrichtung 31 zueinander fluchtend. Infolge des mäanderförmigen Verlaufs liegt eine lokal gepfeilte Form des Trag- oder Leitelementes 29 vor, während das Trag- oder Leitelement 29 global nicht gepfeilt ausgebildet ist. Eine entsprechend global gepfeilte Ausgestaltung mit zusätzlicher lokaler Pfeilung ist ebenfalls möglich. Die Verhältnisse der Wellenlänge des mäanderförmigen Verlaufes zur Kantenlänge sowie der Länge eines Zahnes zu der Tiefe haben einen oberen Grenzwert von 1 und können beliebig klein sein. In den Fig. 7 bis 10 sind die dargestellten Schnittebenen VIII-VIII und X-X parallel zur Strömungsrichtung orientiert.

Fig. 11 zeigt ein Triebwerk 41 oder eine Triebwerksgondel, wie diese beispielsweise Einsatz in einem Überschallflugzeug SR-71 "Blackbird" eingesetzt wird. Eingangsseitig besitzt das Triebwerk einen Ringflügel 42, welcher in erster Näherung als hohlzylinderförmig bezeichnet werden kann mit einem freien Endbereich, der die zur Strömung weisende Stirnkontur bildet, und einem gegenüberliegenden Endbereich, der fest an die übrigen Teile oder ein Gehäuse des Triebwerkes 41 angebunden ist.

Fig. 12 zeigt ein Triebwerk 41, wobei in diesem Fall die der Anströmung zugewandte Stirnkontur 30 entsprechend den zuvor dargestellten Ausführungsbeispielen zu dem Trag- oder Leitelement 29 bzw. den Lamellenflügeln 5, 6 ausgebildet ist. Der Ringflügel 42 bildet gemeinsam mit einem kegelförmigen Zentralelement 43 einen sich verjüngenden Kanal mit kreisringförmigem Querschnitt. Der Umfang des Ringflügels 42 beträgt ein Vielfaches der Wellenlänge der dargestellten Zahnung, so dass eine volle Wellenanzahl auf dem Umfang des Ringflügels 42 angebracht werden kann.

In Fig. 13 sind Lufteinläufe 44 dargestellt, hier mit zwei unmittelbar aneinander angrenzenden Lufteinlaufschächten 45, 46. Jeder Lufteinlaufschacht 45, 46 ist in Umfangsrichtung von einem Trag- oder Leitelement 29 bzw. einem Lamellenflügel 5, 6 entsprechend den zuvor erläuterten Ausführungsformen begrenzt, wobei für eine zentrale Trennwand der Lufteinlaufschächte 45, 46 ein gemeinsamer Lamellenflügel 5, 6 bzw. ein Trag- oder Leitelement 29 Einsatz findet. Lufteinläufe 44 gemäß Fig. 13 und 14 finden beispielsweise Einsatz als Lufteinläufe für einen "EUROFIGHTER".

Fig. 14 zeigt einen Lufteinlauf 44, bei dem die Trag- oder Leitelemente 29 bzw. Lamellenflügel 5, 6, die die Lufteinlaufschächte 45, 46 begrenzen, zumindest auf der der Strömung zugewandten Seite mäanderförmig entsprechend den vorangegangenen Ausführungsbeispielen ausgebildet sind. Hierbei können einzelne Trag- oder Leitelemente 29 in Richtung der Anströmung zueinander versetzt sein, so dass die Maxima 10 und 34 und die Minima 11, 35 nicht zwingend in einer durch die Querrichtung 38 und die Längsrichtung 31 vorgegebenen Ebene liegen müssen.

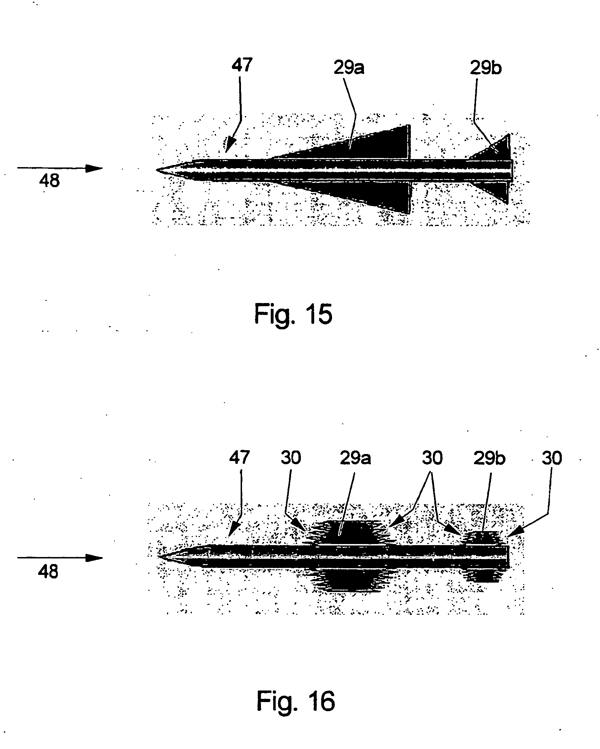

Fig. 15 zeigt einen herkömmlichen Flugkörper 47 mit Trag- oder Leitelementen 29a, 29b, die jeweils eine globale Pfeilung aufweisen, gemäß Fig. 15 allerdings mit unterschiedlichen Pfeilungswinkeln.

Fig. 16 zeigt einen Flugkörper 47. Gemäß Fig. 16 sind sowohl die Vorder- als auch die Hinterkanten der Trag- oder Leitelemente 29a, 29b sowohl global gepfeilt ausgebildet als auch mit einer lokalen mäanderförmigen Stirnkontur ausgestattet. Durch die optimierte Kombination der global gepfeilten Form mit der lokalen Pfeilung der Vorderkanten von Flügeln, Leit- und Steuerflächen können niedrige Druck- bzw. Wellenwiderstände bei hohen Geschwindigkeiten (insbesondere infolge der lokalen Pfeilung) mit der erhöhten Leistung bei niedrigen Geschwindigkeiten (insbesondere infolge der globalen Planform) besser kombiniert werden.

Bei Überschallgeschwindigkeiten soll der positive Effekt der lokalen Pfeilung der Vorderkanten von Trag- und Steuerflächen ähnlich wie bei einem global gepfeilten Planarflügel ausfallen. Bei der Annahme, dass ein einfacher Vergleich verschiedener Flügelformen beim Planarflügel (Rechteck-, Delta-, Arrow-flügel usw.) auch für die neuartig gezahnten Konfigurationen aussagekräftig ist, kann eine Aussage über den angestrebten Effekt gemacht werden. Gemäß [2] zeigt ein Rechteckflügel bei M = 4 eine maximale Gleitzahl (d. h. das Verhältnis des Auftriebes zum Widerstand) von 3.9 und ein vergleichbarer Deltaflügel mit einer Pfeilung von 60 ° entsprechend ca. 5.8. Das ist ein Gewinn von fast 50 %. Diese Angaben berücksichtigen keine Wechselwirkung der benachbarten Zahnflächen, so dass die angegebenen Werte lediglich eine grobe Abschätzung liefern.

Bei Transschallgeschwindigkeiten würde die erfindungsgemäße Konfiguration voraussichtlich davon profitieren, dass die lokale Vorderkantenpfeilform zu kleineren effektiven Machzahlen und dadurch auch zu kleineren Druckwiderständen führen wird.

Ein weiterer Vorteil ergibt sich an Trag- und Steuerflächen dadurch, dass sehr hohe Pfeilwinkel erreicht werden können, ohne dass die Flächen ein ungünstiges kleines Seitenverhältnis (= Spannweite/Flügeltiefe) haben. So besitzt beispielsweise ein Flügel mit gezahnter Vorderkante bei gleicher Flächengröße und gleichem Pfeilwinkel eine wesentlich kleinere Flügeltiefe als ein vergleichbarer global gepfeilter Flügel (vgl. Fig. 16). Das bedeutet, dass ein wesentlich höherer Auftriebsanstieg bei etwa gleich gebliebenem Wellenwiderstand zu erwarten ist. Außerdem würde ein größeres Seitenverhältnis bei den Rudern auch kleinere Scharniermomente bedeuten, die zu kleineren Rudermaschinen und zur zusätzlichen Energieersparnis führen. Die Wirkung der Steuer- bzw. Tragflächen mit größerer Spannweite am Flugkörperrumpf ist auch noch deswegen vorteilhaft, weil der Einfluss der dicken Rumpfgrenzschicht dabei vermindert werden kann.

Neben einer Fertigung von Trag- oder Leitelementen 29 mit den erfindungsgemäßen mäanderförmigen Konturen können auch abweichend ausgebildete Trag- oder Leitelemente 29 nachträglich mit Zusatzbauteilen versehen werden, die über mäanderförmige Stirnkonturen verfügen, so dass eine nachträgliche Leistungssteigerung erreicht werden kann.

In den Figuren ist mit einer Längsachse 31 eine Achse entlang in der dargestellten Stirnkonturen angegeben sowie eine Querachse 38, welche sich ungefähr in Dickenrichtung des Trag- oder Leitelementes erstreckt. Beispielsweise bilden die Längsachse 31, die Querachse 38 und eine Strömungsrichtung 48 für ein ungepfeiltes Trag- oder Leitelement ein Othogonalsystem. Abweichend zu den dargestellten Ausführungsformen kann es sich bei der Längsachse 31 um eine gekrümmte Achse handeln, so dass beispielsweise ein Ringflügel gebildet sein kann oder sich eine mit dem Verlauf ändernde globale Pfeilung ergibt.

Bei Trag- und Leitelementen für andere Einsatzgebiete als die Gitterflügel sind die in Figur 6 angegebenen Profilverläufe entsprechend anwendbar, wobei beispielsweise für einen Lufteinlauf mit T als Seitenkantenlänge eines einzelnen Strömungskanales oder bei Ringflügeln oder Trag- oder Steuerflächen, bei denen T die entsprechende Kantenlänge oder bei einem Flügel die halbe Spannweite oder beim Ringflügel den Umfang bezeichnet, die Wellenlänge des mäanderförmigen Verlaufes insbesondere kleiner als 1 T gewählt wird und vorzugsweise kleiner als 0,5 T.

Die in den Fig. 11 bis 16 dargestellten und hierzu beschriebenen Anwendungsfälle mäanderförmiger Kanten sind vom Wortlaut der Patentansprüche nicht umfasst.

## BEZUGSZEICHENUSTE

| | | | |
|---|---|---|---|
| 1 | Gitterflügel | 11 | Minimum |
| 2 | Rahmen | 12 | Stirnkontur (Rahmen) |
| 3 | Verjüngung | 13 | Maximum (Rahmen) |
| 4 | Halteelemente | 14 | Minimum (Rahmen) |
| 5 | Lamellenflügel | 15 | Bohrungen |
| 6 | Lamellenflügel | 16 | Geradenabschnitt |
| 7 | Strömungskanal | 17 | Phase |
| 8 | Stirnkontur von 5 | 18 | Stirnkontur |
| 9 | Stirnkontur von 6 | 19 | Kurvenverlauf (sinusförmig) |
| 10 | Maximum | 20 | Kurvenverlauf (zickzack 4T) |
| 21 | Kurvenverlauf (zickzack 2T) | 31 | Längsrichtung |
| 22 | Kurvenverlauf (sägezahn T) | 32 | Seitenfläche |
| 23 | Kurvenverlauf (zickzack T) | 33 | Übergangskontur |
| 24 | Kurvenverlauf (unsym. T) | 34 | Maximum |
| 25 | Kurvenverlauf (zickzack T/2) | 35 | Minimum |
| 26 | Kurvenverlauf (zickzack T/3) | 36 | Verbindungskontur Stirnkontur |
| 27 | Grundfläche | 37 | Verbindungskontur Übergangskontur |
| 28 | Geradenabschnitt | 38 | Querrichtung |

(fortgesetzt)

| | | | |
|---|---|---|---|
| 29 | Trag- oder Leitelement | 39 | Kontur bei Minima in Querrichtung |
| 30 | Stirnkontur | 40 | Kontur bei Maxima in Querrichtung |
| 41 | Triebwerk | 46 | Lufteinlaufschacht |
| 42 | Ringflügel | 47 | Flugkörper |
| 43 | Zentralelement | 48 | Strömungsrichtung |
| 44 | Lufteinlauf | | |
| 45 | Lufteinlaufschacht | | |

**Patentansprüche**

1. Trag- oder Leitelement mit Vorderkanten und Hinterkanten für ein Fluggerät mit Fluggeschwindigkeiten im Überschallbereich, wobei mindestens eine Stirnkontur (8, 9) einer in eine Längsrichtung (31) verlaufenden Vorder- oder Hinterkante mäanderförmig ausgebildet ist, **dadurch gekennzeichnet, dass** das Trag- oder Leitelement ein Gitterflügel ist und die Vorder- und Hinterkanten und die Stirnkontur (8, 9) mit mindestens einem Lamellenflügel des Gitterflügels gebildet sind, der einen Strömungskanal (7) begrenzt.

2. Trag- oder Leitelement nach Anspruch 1, **dadurch gekennzeichnet, dass** die Stirnkontur (8, 9) zusätzlich zu einer lokal mäanderförmigen Stirnkontur global gepfeilt ausgebildet ist.

3. Trag- oder Leitelement nach Anspruch 1 oder 2, **dadurch gekennzeichnet, dass** die Stirnkontur quer zu dem mäanderförmigen Verlauf ein von dem Tragelement vorstehendes Maximum sowie zwei seitlich des Maximums angeordnete oder außen liegende Minima aufweist.

4. Trag- oder Leitelement nach Anspruch 3, **dadurch gekennzeichnet, dass** das Maximum und jeweils ein außen liegendes Minimum über eine Gerade, einen konkaven Verlauf, einen konvexen Verlauf oder einen parabelförmigen Verlauf verbunden sind.

5. Trag- oder Leitelement nach einem der Ansprüche 1 bis 4, **dadurch gekennzeichnet, dass** mindestens eine Stirnkontur (8, 9) in Längsrichtung mit Geradenabschnitten (16, 28) ausgebildet ist, welche Maxima (10) und Minima (11) der Stirnkontur (8, 9) in Strömungsrichtung miteinander verbinden.

6. Trag- oder Leitelement nach Anspruch 5, **dadurch gekennzeichnet, dass** die Stirnkontur (8, 9) zwischen einem Maximum (10) und benachbarten Minima (11) in Strömungsrichtung einen Pfeilwinkel $\lambda$ zwischen 20° und 80° aufweist.

7. Trag- oder Leitelement nach Anspruch 5, **dadurch gekennzeichnet, dass** die Stirnkontur (8, 9) zwischen einem Maximum (10) und benachbarten Minima (11) in Strömungsrichtung einen Pfeilwinkel $\lambda$ zwischen 20° und 70° aufweist.

8. Trag- oder Leitelement nach Anspruch 1, **dadurch gekennzeichnet, dass** die Stirnkontur (8, 9) im Bereich eines Strömungskanals (7) in einem Randbereich über ein Minimum (11) sowie im anderen Randbereich über ein Maximum (10) in Strömungsrichtung verfügt.

9. Trag- oder Leitelement nach Anspruch 1, **dadurch gekennzeichnet, dass** die Stirnkontur (8, 9) im Bereich eines Strömungskanals (7) ein Maximum (10) sowie in den Randbereichen desselben Strömungskanals (7) jeweils ein Minimum (11) in Strömungsrichtung aufweist.

10. Trag- oder Leitelement nach Anspruch 1, **dadurch gekennzeichnet, dass** die Stirnkontur (8, 9) im mittigen Bereich eines Strömungskanals (7) ein Minimum (11) sowie in den Randbereichen desselben Strömungskanals (7) jeweils ein Maximum (10) in Strömungsrichtung aufweist.

11. Trag- oder Leitelement nach einem der Ansprüche 1, 8, 9 und 10, **dadurch gekennzeichnet, dass** die Stirnkontur (8, 9) im Bereich eines Strömungskanals (7) mehrere Maxima (10) und mehrere Minima (11) in Strömungsrichtung aufweist.

**12.** Trag- oder Leitelement nach einem der Ansprüche 1, 8, 9, 10 und 11, **dadurch gekennzeichnet, dass** die Lamellenflügel (5, 6) in einem Rahmen (2) gelagert sind.

**13.** Trag- oder Leitelement nach Anspruch 12, **dadurch gekennzeichnet, dass** mindestens eine Stirnkontur (12) des Rahmens (2) mäanderförmig ausgebildet ist.

**14.** Trag- oder Leitelement nach einem der Ansprüche 1 und 8 bis 13, **dadurch gekennzeichnet, dass** ein Querschnitt des Lamellenflügels (5, 6) und/oder des Rahmens (2) rautenförmig oder sechseckig ist.

**Claims**

**1.** Supporting or guiding element with leading edges and trailing edges for a flying object for transonic or supersonic flight velocities, wherein at least one facing contour (8, 9) of a leading or trailing edge extending in a longitudinal direction (31) is shaped with meanders, **characterized by** the supporting or guiding element being a grid fin and the leading and trailing edges and the facing contour (8, 9) being built with at least one lamella or fin of the grid fin limiting a streaming channel (7).

**2.** Supporting or guiding element of claim 1, wherein the facing contour (8, 9) additional to being locally shaped with meanders is globally swept or backswept.

**3.** Supporting or guiding element of claim 1 or 2, wherein the facing contour comprises a maximum protruding transverse to the shape with meanders from the supporting element as well as two minima located laterally from the maximum or exterior minima.

**4.** Supporting or guiding element of claim 3, wherein the maximum and respective exterior minima are connected by a straight contour, a concave contour, a convex contour or a parabolic contour.

**5.** Supporting or guiding element of one of claims 1 to 4, wherein at least one facing contour (8, 9) is built with straight sections (16, 28), the straight sections (16, 28) in longitudinal directions connecting maxima (10) and minima (11) of the facing contour (8, 9) in streaming direction with each other.

**6.** Supporting or guiding element of claim 5, wherein the facing contour (8, 9) between a maximum (10) and adjacent minima (11) comprises a sweeping angle $\lambda$ between 20° and 80° in streaming direction.

**7.** Supporting or guiding element of claim 5, wherein the facing contour (8, 9) between a maximum (10) and adjacent minima (11) comprises a sweeping angle $\lambda$ between 20° and 70° in streaming direction.

**8.** Supporting or guiding element of claim 1, wherein the facing contour (8, 9) in the region of a streaming channel (7) in one boundary region comprises a minimum (11) and in another boundary region comprises a maximum (10) in streaming direction.

**9.** Supporting or guiding element of claim 1, wherein the facing contour (8, 9) in the region of a streaming channel (7) comprises a maximum (10) as well as in the boundary region of the streaming channel (7) comprises respective minima (11) in streaming direction.

**10.** Supporting or guiding element of claim 1, wherein the facing contour (8, 9) in a middle region of a streaming channel (7) comprises a minimum (11) and in the boundary regions of this streaming channel (7) comprises respective maxima (10) in streaming direction.

**11.** Supporting or guiding element of one of claims 1, 8, 9 and 10, wherein the facing contour (8, 9) in the region of a streaming channel (7) comprises a plurality of maxima (10) and minima (11) in streaming direction.

**12.** Supporting or guiding element of one of claims 1, 8, 9, 10 and 11, wherein the lamellas or fins (5, 6) are supported in a frame (2).

**13.** Supporting or guiding element of claim 12, wherein at least one facing contour (12) of the frame (2) is shaped with meanders.

**14.** Supporting or guiding element of one of claims 1 and 8 to 13, wherein a cross-section of a lamella or fin (5, 6) and/or the frame (2) is rhombic or hexagonal.

**Revendications**

**1.** Elément support ou élément directeur doté de bords d'attaque et de bords de fuite pour un appareil volant présentant des vitesses de vol de l'ordre de la vitesse supersonique, au moins une structure frontale (8, 9) d'un bec d'attaque ou d'un bec de fuite agencé dans une direction longitudinale (31) étant conçue en forme de méandre, **caractérisé en ce que** l'élément support ou l'élément directeur est une aile en treillis et les becs d'attaque et de fuite et le contour frontal (8,9) sont formés avec au moins une aile à lamelles de l'aile en treillis, qui délimite un canal d'écoulement (7).

**2.** Elément support ou élément directeur selon la revendication 1, **caractérisé en ce que** le contour frontal (8, 9) est conçu globalement en flèche en supplément d'un contour frontal localement en forme de méandre.

**3.** Elément support ou élément directeur selon la revendication 1 ou 2, **caractérisé en ce que** le contour frontal présente transversalement au tracé en forme de méandre un maximum dépassant de l'élément support et deux minima disposés à côté du maximum ou disposés à l'extérieur.

**4.** Elément support ou élément directeur selon la revendication 3, **caractérisé en ce que** le maximum et à chaque fois un minimum disposé à l'extérieur sont reliés par une droite, un tracé concave, un tracé convexe ou un tracé en forme de parabole.

**5.** Elément support ou élément directeur selon l'une quelconque des revendications 1 à 4, **caractérisé en ce qu'**au moins un contour frontal (8, 9) est conçu dans le sens longitudinal avec des tronçons de droite (16, 28), lesquels relient des maxima (10) et des minima (11) du contour frontal (8, 9) dans le sens d'écoulement les uns avec les autres.

**6.** Elément support ou élément directeur selon la revendication 5, **caractérisé en ce que** le contour frontal (8, 9) présente un angle de flèche À entre 20° et 80° entre un maximum (10) et des minima (11) voisins dans le sens d'écoulement.

**7.** Elément support ou élément directeur selon la revendication 5, **caractérisé en ce que** le contour frontal (8, 9) présente un angle de flèche λ entre 20° et 70° entre un maximum (10) et des minima (11) voisins dans le sens d'écoulement

**8.** Elément support ou élément directeur selon la revendication 1, **caractérisé en ce que** le contour frontal (8, 9) dispose d'un minimum (11) dans la zone d'un canal d'écoulement (7) dans une zone périphérique et d'un maximum (10) dans l'autre zone périphérique dans le sens d'écoulement.

**9.** Elément support ou élément directeur selon la revendication 1, **caractérisé en ce que** le contour frontal (8, 9) présente un maximum (10) dans la zone d'un canal d'écoulement (7) et un minimum (11) dans chacune des zones périphériques du même canal d'écoulement (7) dans le sens d'écoulement.

**10.** Elément support ou élément directeur selon la revendication 1, **caractérisé en ce que** le contour frontal (8, 9) présente un minimum (11) dans la zone centrale d'un canal d'écoulement (7) et un maximum (10) dans chacune des zones périphériques du même canal d'écoulement (7) dans le sens d'écoulement.

**11.** Elément support ou élément directeur selon l'une quelconque des revendications 1, 8, 9 et 10, **caractérisé en ce que** le contour frontal (8, 9) présente dans la zone d'un canal d'écoulement (7) plusieurs maxima (10) et plusieurs minima (11) dans le sens d'écoulement.

**12.** Elément support ou élément directeur selon l'une quelconque des revendications 1, 8, 9, 10 et 11, **caractérisé en ce que** les ailes à lamelles (5, 6) sont montées dans un cadre (2).

**13.** Elément support ou élément directeur selon la revendication 12, **caractérisé en ce qu'**au moins un contour frontal (12) du cadre (2) est conçu en forme de méandre.

**14.** Elément support ou élément directeur selon l'une quelconque des revendications 1 et 8 à 13, **caractérisé en ce qu'**une section de l'aile à lamelles (5, 6) et/ou du cadre (2) a une forme de losange ou hexagonale.

Fig. 1

Fig. 2

Fig. 3

Fig. 4

Fig. 5

Fig. 6

EP 1 602 575 B1

Fig. 7

Fig. 8

Fig. 9

Fig. 10

18

Fig. 11

Fig. 12

Fig. 13

Fig. 14

47    29a    29b

48 →

## Fig. 15

47    30    29a    30    29b    30

48 →

## Fig. 16

**EP 1 602 575 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4194519 A
- US 5901925 A
- US 3069119 A
- US 5088665 A
- US 6073879 A
- EP 829424 B1

**In der Beschreibung aufgeführte Nicht-Patentliteratur**

- **D. Bushnell.** Supersonic Aircraft Drag Reduction. *AIAA Paper 90-1596,* Juni 1990
- **Bertin J. ; Smith M.** Aerodynamics for Engineers. Prentice-Hall, 1979, 410
- **Belotserkovskii S.M. et al.** GITTERFLÜGEL. *Maschinostroenie,* 1985, 320
- **T.E. Martin ; R.T. Wintey ; D. Kleenias.** Übersetzung: Lattice Wings, also called wings with internal framework. Missile And Space Intelligence Center United States Army, 1985
- **Böhm G.** Aerodynamische Grundlagen und Eigenschaften von Gitterflügeln zur [4] Steuerung von Lenkflugkörpern. *IABG-Bericht B-WT 4719/02,* 1994, vol. 67
- **Washington W.D. ; Miller M.S.** An Experimental Investigation of Grid Fin [5] Drag Reduction Techniques. *AIAA Paper, 93-0035, 31st Aerospace Sciences Meeting & Exhibit,* 11. Januar 1993
- **Washington W.D. ; Miller M.S.** Experimental Investigations of Grid Fin [6] Aerodynamics: A Synopsis of Nine Wind Tunnel and Three Flight Tests. *MISSILE AERODYNAMICS, RTO-MP-5,* 1998, 10-110-14
- **Fournier E.Y.** Wind Tunnel Investigation of Grid Fin and Conventional Planar [7] Control Surfaces. *AIAA Paper, 2001-0256, 39st Aerospace Sciences Meeting & Exhibit,* 08. Januar 2001